# EUROPÄISCHE PATENTSCHRIFT

(11) **EP 1 919 019 B1**
(45) Veröffentlichungstag und Bekanntmachung des Hinweises auf die Patenterteilung: **03.11.2010**
(21) Anmeldenummer: 07113896.0
(22) Anmeldetag: 07.08.2007
(51) Int. Cl.: H01M 8/04, H01M 8/06, H01M 8/00

(54) **Brennstoffzellensystem mit Brenneranordnung**
Fuel cell system with burner assembly
Pile à combustible avec un agencement de brûleur

(30) Priorität: 28.09.2006 DE 102006046255
(43) Veröffentlichungstag der Anmeldung: 07.05.2008
(73) Patentinhaber: J. Eberspächer GmbH & Co. KG, 73730 Esslingen (DE)
(72) Erfinder: Kaupert, Andreas, 73730, Esslingen (DE)
(74) Vertreter: BRP Renaud & Partner

(56) Entgegenhaltungen:
- EP-A- 1 124 275
- EP-A- 1 553 653
- DE-A1- 10 149 014
- DE-A1- 19 960 093
- DE-A1-102004 049 903

## Beschreibung

Die vorliegende Erfindung betrifft ein Brennstoffzellensystem, insbesondere in einem Kraftfahrzeug, mit den Merkmalen des Oberbegriffs des Anspruchs 1.

Aus der DE 10 2004 049 903 A1 ist ein Brennstoffzellensystem bekannt, das eine Brennstoffzelle zum Generieren von elektrischem Strom aus einem wasserstoffhaltigen Anodengas und einem sauerstoffhaltigen Kathodengas sowie mit einer Brenneranordnung ausgestattet ist. Die Brenneranordnung weist einen Brenner zum Verbrennen eines wasserstoffhaltigen Brenngases mit einem sauerstoffhaltigen Oxidatorgas auf, sowie eine Brenngaszuführung zur Versorgung des Brenners mit einem wasserstoffhaltigen Brenngas und eine Oxidatorzuführung zur Versorgung des Brenners mit einem sauerstoffhaltigen Oxidatorgas. Die Brenngaszuführung und die Oxidatorgaszuführung führen das Brenngas und das Oxidatorgas dem Brenner separat zu, so dass sich das Brenngas und das Oxidatorgas erst im Brenner vermischen. Der Brenner ist dabei als Porenbrenner ausgestaltet und die Brenngaszuführung ist durch eine Anodenseite der Brennstoffzelle gebildet. Außerdem ist eine Zündeinrichtung vorgesehen. Der Brenner enthält eine durchströmbare, poröse Struktur, in der im Betrieb des Brenners die Verbrennung von Brenngas mit Oxidatorgas stattfindet.

Aus der DE 101 49 014 A1 ist ein weiteres Brennstoffzellensystem mit einem Porenbrenner bekannt.

Aus der EP 1 124 275 A2 ist ein weiteres Brennstoffzellensystem bekannt, das ebenfalls mit einem Restgasbrenner ausgestattet ist, der mit offener Flamme arbeitet.

Aus der DE 10 2004 033 545 A1 ist ein Brennstoffzellensystem bekannt, das eine Brennstoffzelle sowie einen Restgasbrenner umfasst. Die Brennstoffzelle dient zum Generieren von elektrischem Strom aus einem wasserstoffhaltigen Anodengas und einem sauerstoffhaltigen Kathodengas, sogenannte "Verstromung". Bei dieser Verstromung wird in der Regel nicht der gesamte Wasserstoff des Anodengases umgesetzt, so dass im Anodenabgas noch Wasserstoff enthalten ist. Um die in den Abgasen der Brennstoffzelle chemisch gebundene Energie möglichst vollständig umsetzen zu können, ist der Brennstoffzelle der Restgasbrenner nachgeordnet, in dem eine Verbrennung wasserstoffhaltiger Anodenabgase mit sauerstoffhaltiger Kathodenabgase stattfindet.

Beim bekannten Brennstoffzellensystem bildet die Anodenseite der Brennstoffzelle quasi eine Brenngaszuführung zur Versorgung des Brenners mit einem Wasserstoff enthaltenden Brenngas, während die Kathodenseite der Brennstoffzelle quasi eine Oxidatorzuführung zur Versorgung des Brenners mit einem Sauerstoff enthaltenden Oxidatorgas bildet.

Neben der Verwendung eines Brenners als Restgasbrenner in einem Brennstoffzellensystem gibt es noch eine Vielzahl anderer Anwendungsgebiete für einen Brenner. Beispielsweise sind Brenner in Heizeinrichtungen für Gebäude und Fahrzeuge, z.B. als Zuheizer oder als Standheizung, allgemein bekannt.

Aus der DE 10 2004 012 988 A1 ist ein Porenbrenner bekannt, der mit Wasserstoff als Brenngas und mit Luft als Oxidatorgas betrieben werden kann. Der bekannte Porenbrenner wird eingangsseitig mit einem gegebenenfalls hoch explosiven Gemisch aus Brenngas und Oxidatorgas versorgt.

Die vorliegende Erfindung beschäftigt sich mit dem Problem, für ein Brennstoffzellensystem der eingangs genannten Art eine verbesserte Ausführungsform anzugeben, die sich insbesondere durch reduzierte Schadstoffemissionen und/oder durch eine kompakte Bauweise und/oder durch einen sicheren und/oder stabilen Betrieb auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, für die Verbrennung eines Wasserstoff enthaltenden ersten Gases mit einem Sauerstoff enthaltenden zweiten Gas einen Porenbrenner zu verwenden. Insbesondere wird somit für die Verbrennung der Brennstoffzellenabgase ein Porenbrenner verwendet. Ein Porenbrenner charakterisiert sich dadurch, dass die Verbrennungsreaktion innerhalb eines porösen, inerten Mediums erfolgt, also insbesondere ohne freie Flammen. Die Verbrennung in einem Porenbrenner zeichnet sich gegenüber einer konventionellen Verbrennung mit offenen Flammen durch viele Vorteile aus, insbesondere durch höhere Verbrennungsraten, erhöhte Flammenstabilität bei geringen Geräuschemissionen und niedrigeren Verbrennungstemperaturen. Des Weiteren zeichnet sich ein Porenbrenner durch geringe Emissionen von Kohlenmonoxid sowie durch eine extrem kompakte Bauform aus. Darüber hinaus arbeitet ein derartiger Porenbrenner innerhalb eines relativ großen Leistungsspektrums zuverlässig. Beispielsweise kann ein Porenbrenner bei einem Verhältnis von 1:10 zwischen minimaler Leistung und maximaler Leistung stabil betrieben werden. Dies ist für die Verbrennung von Brennstoffzellenabgase von besonderem Vorteil, da die Menge der anfallenden Abgase vom jeweiligen Betriebszustand der Brennstoffzelle abhängt, wobei die Brennstoffzelle bevorzugt in Abhängigkeit des jeweiligen Strombedarfs betrieben wird. Dementsprechend können relativ große Schwankungen bezüglich der zur Verbrennung zur Verfügung stehenden Abgasmenge auftreten. Der als Porenbrenner ausgestaltete Restgasbrenner ermöglicht dabei innerhalb dieser großen Schwankungsbreite anfallender Brennstoffzellenabgase eine hinreichend stabile Verbrennungsreaktion.

Erfindungsgemäß ist nun der Brenner der Brennstoffzelle nachgeordnet und als Restgasbrenner zum Verbrennen von wasserstoffhaltigem Anodenabgas der Brennstoffzelle mit sauerstoffhaltigem Kathodenabgas der Brennstoffzelle ausgestaltet. Die Brenngaszuführung ist durch eine Anodenseite der Brennstoffzelle gebildet, während die Oxidatorzuführung durch eine Kathodenseite der Brennstoffzelle gebildet ist. Der Brenner bzw. der Restgasbrenner enthält eine durchströmbare, poröse Struktur, in der im Betrieb des Brenners bzw. des Restgasbrenners die Verbrennung von Brenngas mit Oxidatorgas oder von Anodenabgas mit Kathodenabgas stattfindet. Diese poröse Struktur weist in ihrer Durchströmungsrichtung hintereinander zumindest zwei Zonen mit unterschiedlichen Porengrößen auf, wobei eine anströmseitige Vorwärmzone eine kleinere Porengröße aufweist als eine abströmseitige Reaktionszone. Der Brenner bzw. der Restgasbrenner weist die Zündeinrichtung stromauf der porösen Struktur auf.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

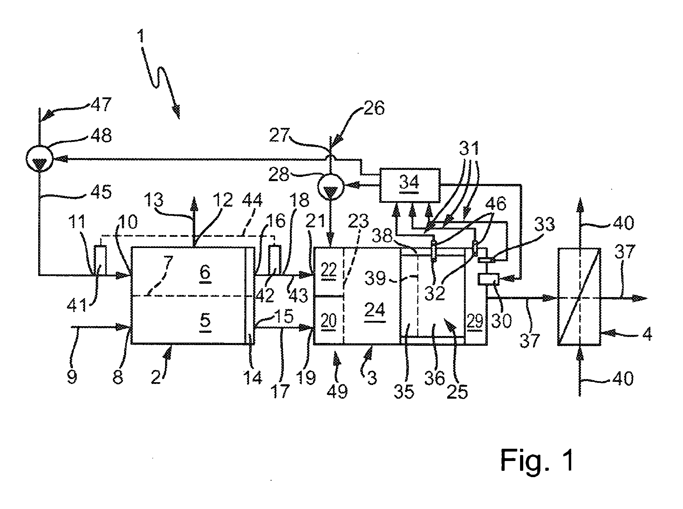

Die einzige Fig. 1 zeigt eine stark vereinfachte, schaltplanartige Prinzipdarstellung eines Brennstoffzellensystems.

In Fig. 1 ist eine Brenneranordnung 49 nach der Erfindung in ein Brennstoffzellensystem 1 integriert. Entsprechend Fig. 1 umfasst ein Brennstoffzellensystem 1 zumindest eine Brennstoffzelle 2, einen Brenner 3 oder Restgasbrenner 3 und optional einen Wärmeübertrager 4. Es ist klar, dass das Brennstoffzellensystem 1 weitere, hier nicht gezeigte Komponenten aufweisen kann, wie z.B. zumindest einen weiteren Wärmeübertrager und einen Reformer zur Erzeugung eines wasserstoffhaltigen Synthesegases aus einem Kohlenwasserstoff-Brennstoff und einem Oxidator, dem optional eine CO-Gasreinigungseinrichtung nachgeordnet sein kann. Dieses Synthesegas kann vorzugsweise der Brennstoffzelle 2 als Anodengas zugeführt werden. Das Brennstoffzellensystem 1 kommt bevorzugt in einem Kraftfahrzeug, insbesondere in einem Nutzfahrzeug, zur Anwendung und kann dort als zusätzliche Stromquelle dienen, die unabhängig vom Betrieb einer Brennkraftmaschine des Fahrzeugs arbeitet. Beispielsweise kann mit Hilfe des Brennstoffzellensystems 1 eine Klimaanlage des Fahrzeugs auch dann betrieben werden, wenn das Fahrzeug ruht und seine Brennkraftmaschine ausgeschaltet ist. Ebenso kann die gesamte Stromversorgung des Fahrzeugs mit dem Brennstoffzellensystem 1 realisiert werden.

Die Brennstoffzelle 2 besitzt eine Anodenseite 5 sowie eine Kathodenseite 6, die beispielsweise durch einen Elektrolyt 7 voneinander getrennt sind. Über einen Anodengaseingang 8 wird der Brennstoffzelle 2 ein wasserstoffhaltiges Anodengas 9 zugeführt. Über einen Kathodengaseingang 10 wird der Brennstoffzelle 2 ein sauerstoffhaltiges Kathodengas 11 zugeführt. Als Anodengas wird vorzugsweise ein wasserstoffhaltiges Synthesegas verwendet, das von einem Reformer des Brennstoffzellensystems 1 hergestellt wird. Als Kathodengas kann insbesondere Luft verwendet werden. Im Betrieb der Brennstoffzelle 2 erfolgt mit Hilfe des Elektrolyts 7 und einem angeschlossenen elektrischen Verbraucher eine Verstromung von Anodengas 9 und Kathodengas 11, bei der Wasserstoff umgesetzt wird und an wenigstens einem elektrischen Anschluss 12 elektrischer Strom 13 abgreifbar ist.

Üblicherweise wird eine derartige Brennstoffzelle 2 aus einer Vielzahl von plattenförmigen Brennstoffzellenelementen gebildet, die hierzu aufeinander gestapelt werden. Die Brennstoffzelle 2 besitzt dann eine Abschlussplatte 14, die einen Anodenabgasausgang 15 und einen Kathodenabgasausgang 16 aufweist. Durch den Anodenabgasausgang 15 tritt wasserstoffhaltiges Anodenabgas 17 aus der Brennstoffzelle 2 aus. Aus dem Kathodenabgasausgang 16 tritt sauerstoffhaltiges Kathodenabgas 18 aus der Brennstoffzelle 2 aus.

Zur Versorgung der Brennstoffzelle 2 mit Kathodengas ist das Brennstoffzellensystem 1 beispielsweise mit einer Kathodengaszuführung 47 ausgestattet, die an eine Eingangsseite der Brennstoffzelle 2 angeschlossen ist. Die Kathodengaszuführung 47 weist eine Kathodengasleitung 45 auf, die an den Kathodengaseingang 11 angeschlossen ist und die eine Fördereinrichtung 48, z.B. ein Gebläse, enthält.

Der Brenner 3, der hier als Restgasbrenner 3 ausgestaltet ist, dient zur Umsetzung von wasserstoffhaltigem Brenngas mit sauerstoffhaltigem Oxidatorgas. Bei der hier gezeigten bevorzugten Anwendungsform bildet das Wasserstoff enthaltende Anodenabgas 17 der Brennstoffelle 2 das Brenngas, während das Sauerstoff enthaltende Kathodenabgas 18 der Brennstoffzelle 2 das Oxidatorgas bildet. Zur Versorgung des Brenners 3 mit dem Brenngas ist eine Brenngaszuführung vorgesehen, die hier durch die Anodenseite 5 der Brennstoffzelle 2 gebildet ist. Zur Versorgung des Brenners 3 mit Oxidatorgas ist eine Oxidatorgaszuführung vorgesehen, die hier durch die Kathodenseite 6 der Brennstoffzelle 2 gebildet ist.

Der Restgasbrenner 3 ist der Brennstoffzelle 2 nachgeordnet, also bezüglich der durch die Brennstoffzelle 2 hindurchgeführten Gasströme stromab der Brennstoffzelle 2 angeordnet. Der Restgasbrenner 3 dient zur Verbrennung des Anodenabgases 17 mit dem Kathodenabgas 18, um dadurch eine Umsetzung oder Oxidation des in der Brennstoffzelle 2 nicht umgesetzten Wasserstoffs zu realisieren. Hierdurch kann die Energieausbeute und somit der Wirkungsgrad des Brennstoffzellensystems 1 verbessert werden. Gleichzeitig lassen sich dadurch Schadstoffemissionen reduzieren.

Bei der Brennstoffzelle 2 kann es sich um eine Hochtemperatur-Brennstoffzelle handeln, die insbesondere als Festkörper-Brennstoffzelle, sogenannte "SOFC"-Brennstoffzelle ausgestaltet sein kann. Alternativ kann es sich bei der Brennstoffzelle 2 auch um eine Niedertemperatur-Brennstoffzelle handeln, die insbesondere als PEM-Brennstoffzelle ausgestaltet sein kann und dementsprechend mit einer Protonen austauschenden Membran bzw. mit einer polymeren Elektrolyt-Membran arbeitet.

Der Restgasbrenner 3 besitzt eingangsseitig einen Anodenabgaseingang 19, durch den das Anodenabgas 17 in einen Anodenabgaspfad 20 des Restgasbrenners 3 eintritt. Des Weiteren ist ein Kathodenabgaseingang 21 vorgesehen, durch den das Kathodenabgas 18 in einen Kathodenabgaspfad 22 des Restgasbrenners 3 eintritt. Der Anodenabgaspfad 20 und der Kathodenabgaspfad 22 sind so ausgestaltet, dass die Brennstoffzellenabgase durch eine Wandstruktur 23 über separate oder getrennte Einströmungsöffnungen, z.B. nebeneinander oder ineinander, in einen Mischraum 24 des Restgasbrenners 3 einströmen. Diese Wandstruktur 23 weist hierzu eine Vielzahl von hier nicht dargestellten Anodenabgasöffnungen, die mit dem Anodenabgaspfad 20 kommunizieren, sowie eine Vielzahl von nicht dargestellten Kathodenabgasöffnungen auf, die mit dem Kathodenabgaspfad 22 kommunizieren. Dabei sind die Anodenabgasöffnungen und die Kathodenabgasöffnungen über die gesamte Wandstruktur 23 gleichmäßig oder regelmäßig verteilt angeordnet, so dass sich bereits beim Einströmen der Brennstoffzellenabgase in den Mischraum 24 eine intensive Durchmischung einstellt. Im Mischraum 24 erfolgt dann die weitere Durchmischung bzw. Homogenisierung der Brennstoffzellenabgase, ohne dass es zu einer Verbrennungsreaktion bzw. zu einer Flammenbildung im Mischraum 24 kommt.

Durch die geschilderte Bauweise wird erreicht, dass die Brenngaszuführung, also hier die Anodenseite 5, und die Oxidatorgaszuführung, also hier die Kathodenseite 6, das Brenngas 17, also hier das Anodenabgas 17, und das Oxidatorgas 18, also hier das Kathodenabgas 18, dem Brenner 3, also hier dem Restgasbrenner 3, separat zuführen, so dass sich das Brenngas bzw. Anodenabgas 17 und das Oxidatorgas bzw. Kathodenabgas 18 erst im Brenner bzw. Restgasbrenner 3, respektive in dessen Mischraum 24 vermischen. Die getrennte Medienführung zum Brenner 3 ist von besonderer Bedeutung für einen sicheren Betrieb des Brenners 3.

Des Weiteren ist es üblich, bei einer Niedertemperatur-Brennstoffzelle, insbesondere bei einer PEM-Brennstoffzelle, das Kathodengas 11 mit einem relativ hohen Anteil an Wasserdampf zu versehen. Das Wasser unterstützt den Brennstoffzellenprozess am Elektrolyt 7. Dementsprechend kann gemäß Fig. 1 das Brennstoffzellensystem 1 optional mit einer Einspeiseinrichtung 41 ausgestattet sein, mit deren Hilfe Wasserdampf in das Kathodengas 11 einbringbar ist. Die Einspeiseinrichtung 41 ist hierzu beispielsweise stromauf des Kathodengaseingangs 10 in der Kathodengasleitung 45 angeordnet. Für den Verbrennungsprozess im Restgasbrenner 3 ist ein hoher Wasseranteil im Gemisch unerwünscht. Dementsprechend kann optional eine Entnahmeeinrichtung 42 vorgesehen sein. Mit Hilfe der Entnahmeeinrichtung 42 kann dem Kathodenabgas 18 Wasserdampf entzogen werden. Vorzugsweise ist die Entnahmeeinrichtung 42 hierzu in einer Kathodenabgasleitung 43 angeordnet, die den Kathodenabgasausgang 16 der Brennstoffzelle 2 mit dem Kathodenabgaseingang 21 des Restgasbrenners 3 verbindet. Zwischen der Entnahmeeinrichtung 42 und der Einspeiseinrichtung 41 kann eine Wirkverbindung 44 bestehen, die hier durch eine unterbrochene Linie angedeutet ist. Durch diese Wirkverbindung 44 kann der mit Hilfe der Entnahmeeinrichtung 42 dem Kathodenabgas 18 entnommene Wasserdampf der Einspeiseinrichtung 41 zum Einspeisen in das Kathodengas 11 zugeführt werden. Diese Wirkverbindung 44 kann eine Fördereinrichtung für Wasser bzw. Wasserdampf enthalten. Besonders vorteilhaft ist eine Ausführungsform, bei welcher die Einspeiseinrichtung 41 und die Entnahmeeinrichtung 42 eine bauliche Einheit bilden, so dass die Wirkverbindung 44 im Inneren einer derartigen kombinierten Einspeis- und Entnahmeeinrichtung angeordnet ist. Die Verwendung einer derartigen kombinierten Einspeis- und Entnahmeeinrichtung ist beispielsweise durch einen entsprechenden Verlauf der Kathodenabgasleitung 43 und/oder der Kathodengasleitung 45 realisierbar.

Erfindungsgemäß ist der Restgasbrenner 3 als Porenbrenner ausgestaltet. Hierzu ist der Restgasbrenner 3 mit einer durchströmbaren porösen Struktur 25 versehen, die so ausgestaltet ist und im Restgasbrenner 3 so angeordnet ist, dass im Betrieb des Restgasbrenners 3 die Verbrennung von Anodenabgas 17 mit Kathodenabgas 18 innerhalb dieser porösen Struktur 25 erfolgt. Durch die Verbrennungsreaktion innerhalb der porösen Struktur 25 unterbleibt im Restgasbrenner 3 die Ausbildung einer offenen Flamme, die Schadstoffentwicklung ist vergleichsweise gering und die Umsetzungsrate für den Wasserstoff ist relativ hoch. Gleichzeitig arbeitet der Restgasbrenner 3 mit vergleichsweise niedrigen Temperaturen, was für die Isolation des Brennstoffzellensystems 1 vorteilhaft ist. Die poröse Struktur 25 ist dabei dem Mischraum 24 nachgeordnet, also stromab davon angeordnet.

Zweckmäßig ist der Restgasbrenner 3 an eine Kühlgaszuführeinrichtung 26 angeschlossen, die eine Kühlgaszuführleitung 27 sowie eine darin angeordnete Fördereinrichtung 28, z.B. eine Pumpe oder ein Gebläse, umfasst. Als Kühlgas kann beispielsweise Luft verwendet werden.

Der Restgasbrenner 3 enthält außerdem einen Raum 29, der der porösen Struktur 25 nachgeordnet ist, also stromab davon angeordnet ist. Diesem Raum 29 ist eine Zündeinrichtung 30 zugeordnet, die bei der Inbetriebnahme des Restgasbrenners 3 das die poröse Struktur 25 durchströmende Gemisch aus Anodenabgas und Kathodenabgas zündet und so im Raum 29 eine offene Flamme erzeugt, die sich in die poröse Struktur 25 hinein ausbreitet und stabilisiert. Diese offene Flamme erlischt, sobald die Verbrennungsreaktion innerhalb der offenen Struktur 25 eine hinreichende Umsetzungsrate erreicht. Insoweit dient der Raum 29 als Zündraum.

Der Restgasbrenner 3 ist des Weiteren mit einer Sensorik 31 ausgestattet, die es ermöglicht, die Temperatur der porösen Struktur 25 zu ermitteln. Hierzu umfasst die Sensorik 31 zumindest einen Temperatursensor 32, der unmittelbar an oder in der porösen Struktur 25 die Temperatur misst oder der an einer Abströmseite der porösen Struktur 25, z.B. im Raum 29 angeordnet ist. Ferner kann die Sensorik 31 einen Flammensensor 33 aufweisen, der dem Raum 29 zugeordnet ist und das Vorhandensein bzw. das Fehlen einer offenen Flamme detektiert. Darüber hinaus kann die Sensorik 31 zumindest eine Lambda-Sonde 46 aufweisen. Für die jeweilige Lambda-Sonde 46 bestehen grundsätzlich die gleichen Anordnungsmöglichkeiten wie für den wenigstens einen Temperatursensor 32. Dementsprechend sind in den Figuren zur vereinfachten Darstellung die Bezugszeichen 32 für den Temperatursensor und 46 für die Lambda-Sonde jeweils zur Kennzeichnung der gleichen Komponenten verwendet, so dass es sich bei der jeweiligen Komponente wahlweise um einen Temperatursensor 32 oder um eine Lambda-Sonde 46 handeln kann.

Die einzelnen Sensoren 32, 33 bzw. Sonden 46 der Sensorik 31 sind über entsprechende Signalleitungen mit einer Steuerung 34 verbunden, die ihrerseits über entsprechende Steuerleitungen mit der Kühlgaszuführeinrichtung 26, insbesondere mit deren Fördereinrichtung 28, verbunden ist. Außerdem kann die Steuerung 34 mit der Zündeinrichtung 30 verbunden sein. Ferner kann die Steuerung 34 - wie hier - außerdem mit der Kathodengaszuführung 47 verbunden sein. Die Steuerung 34 ist nun so ausgestaltet, dass sie die Kühlgaszuführeinrichtung 26 in Abhängigkeit der Temperatur der porösen Struktur 25 betätigen kann. Sobald die poröse Struktur 25 eine kritische obere Grenztemperatur erreicht, erhöht die Steuerung 34 die Kühlgaszufuhr. Das Kühlgas wird hierbei an der Kathodenseite des Restgasbrenners 3, also in den Kathodenabgaspfad 22 eingeleitet. Hierdurch kann die Konzentration des Wasserstoffs im Gemisch aus Anodenabgas, Kathodenabgas und Kühlgas reduziert werden, was mit einer Abnahme der Wärmeabgabe bei der Verbrennungsreaktion einhergeht. Sobald die Temperatur in der porösen Struktur 25 eine kritische untere Grenztemperatur erreicht, reduziert die Steuerung 34 die Kühlgaszuführung. Zweckmäßig regelt die Steuerung 34 eine optimale Arbeitstemperatur für die poröse Struktur 25 ein. Alternativ oder zusätzlich kann die Steuerung 34 auch den Volumenstrom zur Versorgung der Brennstoffzelle 2 mit Kathodengas 11 erhöhen, sofern das Betriebsfenster der Brennstoffzelle 2 dies zulässt. Durch die erhöhte Kathodengasmenge erhöht sich auch die dem Restgasbrenner 3 zugeführte Kathodenabgasmenge, was ebenfalls eine Kühlung des Restgasbrenners 3 bzw. der porösen Struktur 25 bewirkt. In der Folge nimmt die Temperatur im Brennraum 24 bzw. in der porösen Struktur 25 ab. Kühlt sich die poröse Struktur 25 zu stark ab, kann durch Reduzieren bzw. Ausschalten der Kühlgaszumischung bzw. durch Reduzieren der Kathodengasversorgung der Brennstoffzelle 2 eine entsprechende Temperaturerhöhung herbeigeführt werden.

Zweckmäßig weist die poröse Struktur 25 zumindest zwei Zonen, nämlich eine Vorwärmzone 35 und eine Reaktionszone 36, auf, die in der Durchströmungsrichtung der porösen Struktur 25 hintereinander angeordnet sind. Die beiden Zonen 35, 36 unterscheiden sich voneinander durch die Größen ihrer Poren. Die anströmseitig angeordnete Vorwärmzone 35 weist dabei eine kleinere Porengröße auf als die abströmseitig angeordnete Reaktionszone 36. Zweckmäßig ist dabei die Porengröße in der Vorwärmzone 35 so klein gewählt, dass sich während des Betriebs des Restgasbrenners 3 innerhalb der porösen Struktur 25 der Vorwärmzone 35 Flammen nicht ausbreiten können. Im Unterschied dazu ist die Porengröße in der Reaktionszone 36 zweckmäßig so groß gewählt, dass sich während des Betriebs des Restgasbrenners 3 innerhalb der porösen Struktur 25 in der Reaktionszone 36 Flammen ausbreiten können. Innerhalb der Reaktionszone 36 kann somit die erwünschte Verbrennungsreaktion stattfinden, während die Vorwärmzone 35 als Flammenrückschlagsperre wirkt. Gleichzeitig dient die Vorwärmzone 35 zum Aufheizen oder Vorwärmen des Gasgemischs, da sich die gesamte poröse Struktur 25 durch die in der Reaktionszone 36 ablaufende Verbrennungsreaktion aufheizt.

Die axiale Trennung zwischen den beiden Zonen 35, 36 ist dabei durch eine unterbrochene Linie angedeutet, die hier mit 39 bezeichnet ist. Im Bereich dieser Trennlinie oder Trennebene 39 grenzen die beiden Zonen 35, 36 unmittelbar aneinander an. Die Zonen 35, 36 können zweckmäßig separat hergestellt sein und können zur Ausbildung der porösen Struktur 25 zusammengesetzt und insbesondere aneinander befestigt sein.

Der Mischraum 24 ist ausgangsseitig durch die poröse Struktur 25 begrenzt, so dass das im Mischraum 24 ausgebildete, homogenisierte Gemisch in die poröse Struktur 25, und zwar in dessen Vorwärmzone 35 eintreten kann. Des Weiteren bildet die poröse Struktur 25 eine eingangsseitige Begrenzung des Raums 29, so dass die in der porösen Struktur 25, und zwar in deren Reaktionszone 36 gebildeten Verbrennungsabgase in den Raum 29 eintreten und aus diesem ausgangsseitig als Brennerabgas 37 austreten können. Der Raum 29 dient insoweit als Abgassammler.

Die poröse Struktur 25 besteht aus einem inerten Werkstoff und nimmt somit an der Verbrennungsreaktion nicht teil. Vorzugsweise kann die poröse Struktur 25 aus einem metallischen oder aus einem keramischen Material oder aus einem Verbundmaterial hergestellt sein.

Die poröse Struktur 25 ist im Restgasbrenner 3 mit Hilfe eines Lagermaterials 38 gelagert, das die poröse Struktur 25 in Umfangsrichtung umhüllt. Das Lagermaterial 38 ist dabei so ausgestaltet, dass es die poröse Struktur 25 innerhalb des Restgasbrenners 3 lagefixiert und dabei gleichzeitig Schwingungen und Erschütterungen dämpft. Außerdem soll das Lagermaterial 38 möglichst gasundurchlässig ausgestaltet sein, um eine die poröse Struktur 25 umgehende Bypassströmung zu vermeiden. Derartige Lagermaterialien, wie z.B. eine Quellmatte oder ein Drahtgestrick, sind grundsätzlich aus anderen Bereichen der Technik bekannt. Beispielsweise kommen derartige Lagermaterialien bei der Lagerung von Partikelfilterelementen und von Katalysatorelementen in entsprechenden Gehäusen von Abgasbehandlungseinrichtungen zum Einsatz.

Der Wärmeübertrager 4 ist einerseits in den Strom des Brennerabgases 37 und andererseits in den Strom eines Wärmeübertragermediums 40 eingebunden. Dabei ist der Wärmeübertrager 4 so ausgestaltet, dass eine Wärmeübertragung zwischen dem Brennerabgas 37 und dem Wärmeübertragermedium 40 erfolgt, ohne dass es dabei zu einem Fluidaustausch zwischen Brennerabgas 37 und Wärmeübertragermedium 40 kommt. Beim Wärmeübertragermedium 40 kann es sich beispielsweise um Prozessfluide des Brennstoffzellensystems 1 handeln. Insbesondere können mit Hilfe des Wärmeübertragers 4 das Kathodengas 11 und/oder das dem weiter oben genannten Reformer zugeführte Oxidatorgas und/oder Wasser bzw. Wasserdampf erwärmt werden. Ebenso kann das Wärmeübertragermedium 40 eine Kühlflüssigkeit eines Kühlkreises des mit dem Brennstoffzellensystem 1 ausgestatteten Fahrzeugs sein.

Bei einer besonderen Ausführungsform kann der Wärmeübertrager 4 eine den Raum 29 ausgangseitig begrenzende Struktur bilden, wodurch der Wärmeübertrager 4 in den Restgasbrenner 3 baulich integriert ist. Zusätzlich oder alternativ kann der Restgasbrenner 3 die Abschlussplatte 14 ersetzen und unmittelbar an die Brennstoffzelle 2 angebaut sein. Der Restgasbrenner 3 ist dann baulich in die Brennstoffzelle 2 integriert und bildet deren Abschlussplatte 14.

## Patentansprüche

1. Brennstoffzellensystem (1), vorzugsweise in einem Kraftfahrzeug,
- mit zumindest einer Brennstoffzelle (2) zum Generieren von elektrischem Strom (13) aus einem wasserstoffhaltigen Anodengas (9) und einem sauerstoffhaltigen Kathodengas (11) und mit einer Brenneranordnung (49),
- wobei die Brenneranordnung einen Brenner (3) zum Verbrennen eines wasserstoffhaltigen Brenngases (17) mit einem sauerstoffhaltigen Oxidatorgas (18) aufweist,
- wobei die Brenneranordnung (49) eine Brenngaszuführung zur Versorgung des Brenners (3) mit dem wasserstoffhaltigen Brenngas (17) aufweist,
- wobei die Brenneranordnung (4) eine Oxidatorzuführung zur Versorgung des Brenners mit dem sauerstoffhaltigen Oxidatorgas (18) aufweist,
- wobei die Brenngaszuführung und die Oxidatorgaszuführung das Brenngas (17) und das Oxidatorgas (18) dem Brenner (3) separat zuführen, so dass sich das Brenngas (17) und das Oxidatorgas (18) erst im Brenner (3) vermischen,
- wobei der Brenner (3) als Porenbrenner ausgestaltet ist,
- wobei eine Zündeinrichtung (30) vorgesehen ist,
- wobei die Brenngaszuführung durch eine Anodenseite (5) der Brennstoffzelle (2) gebildet ist,
- wobei der Brenner (3) eine durchströmbare, poröse Struktur (25) enthält, in der im Betrieb des Brenners (3) die Verbrennung von Brenngas (17) mit Oxidatorgas (18) oder von Anodenabgas (17) mit Kathodenabgas (18) stattfindet, **dadurch gekennzeichnet,**
- **dass** der Brenner (3) der Brennstoffzelle (2) nachgeordnet ist und als Restgasbrenner (3) zum Verbrennen von wasserstoffhaltigem Anodenabgas (17) der Brennstoffzelle (2) mit sauerstoffhaltigem Kathodenabgas (18) der Brennstoffzelle (2) ausgestaltet ist,
- **dass** die Oxidatorzuführung durch eine Kathodenseite (6) der Brennstoffzelle (2) gebildet ist,
- **dass** die poröse Struktur (25) in ihrer Durchströmungsrichtung hintereinander zumindest zwei Zonen (35, 36) mit unterschiedlichen Porengrößen aufweist,
- **dass** eine anströmseitige Vorwärmzone (35) eine kleinere Porengröße aufweist als eine abströmseitige Reaktionszone (36),
- **dass** der Brenner (3) oder der Restgasbrenner (3) die Zündeinrichtung (30) stromab der porösen Struktur (25) aufweist.

2. Brennstoffzellensystem nach Anspruch 1,
**dadurch gekennzeichnet,**
- **dass** die Porengröße in der Vorwärmzone (35) so klein gewählt ist, dass im Betrieb des Brenners (3) oder des Restgasbrenners (3) in der porösen Struktur (25) innerhalb der Vorwärmzone (35) keine Flammenausbreitung stattfindet,
- **dass** die Porengröße in der Reaktionszone (36) so groß gewählt ist, dass im Betrieb des Brenners (3) oder des Restgasbrenners (3) in der porösen Struktur (25) innerhalb der Reaktionszone (36) eine Flammenausbreitung stattfindet.

3. Brennstoffzellensystem nach Anspruch 1 oder 2,
**dadurch gekennzeichnet,**
**dass** der Brenner (3) oder der Restgasbrenner (3) einen Mischraum (24) aufweist, in den eingangsseitig das Brenngas (17) und das Oxidatorgas (18) oder das Anodenabgas (17) und das Kathodenabgas (18) einströmen und der ausgangsseitig durch die poröse Struktur (25) begrenzt ist.

4. Brennstoffzellensystem nach einem der Ansprüche 1 bis 3,
**dadurch gekennzeichnet,**
- **dass** eine Kühlgaszuführeinrichtung (26) vorgesehen ist, mit der dem Brenner (3) oder dem Restgasbrenner (3) eingangsseitig ein Kühlgas zuführbar ist,
- **dass** eine Sensorik (31) zur Ermittlung der Temperatur der porösen Struktur (25) vorgesehen ist,
- **dass** eine mit der Kühlgaszuführeinrichtung (26) und mit der Sensorik (31) verbundene Steuerung (34) vorgesehen ist, welche die Kühlgaszuführeinrichtung (26) in Abhängigkeit der Temperatur der porösen Struktur (25) betätigt.

5. Brennstoffzellensystem nach einem der Ansprüche 1 bis 4,
**dadurch gekennzeichnet,**
- **dass** an die Brennstoffzelle (2) eingangsseitig eine Kathodengaszuführung (47) angeschlossen ist,
- **dass** eine Sensorik (31) zum Ermitteln der Temperatur der porösen Struktur (25) vorgesehen ist,
- **dass** eine mit der Kathodengaszuführung (47) und mit der Sensorik (31) verbundene Steuerung (34) zum Betreiben der Kathodengaszuführung (47) in Abhängigkeit der Temperatur der porösen Struktur (25) vorgesehen ist.

6. Brennstoffzellensystem nach den Ansprüchen 4 und 5,
**dadurch gekennzeichnet,**
**dass** die Steuerung (34) so ausgestaltet ist, dass sie beim Betätigen der Kühlgaszuführung (26) die Betätigung der Kathodengaszuführung (47) berücksichtigt.

7. Brennstoffzellensystem nach einem der Ansprüche 1 bis 6,
**dadurch gekennzeichnet,**
**dass** die poröse Struktur (25) aus einem inerten Werkstoff besteht.

## Claims

1. A fuel cell system (1), preferentially in a motor vehicle,
- with at least one fuel cell (2) for generating electric current (13) from a hydrogen-containing anode gas (9) and a oxygen-containing cathode gas (11) and with a burner arrangement (49),
- wherein the burner arrangement comprises a burner (3) for burning a hydrogen-containing fuel gas (17) with an oxygen-containing oxidant gas (18),
- wherein the burner arrangement (49) comprises a fuel gas feed for supplying the burner (3) with the hydrogen-containing fuel gas (17),
- wherein the burner arrangement (4) comprises an oxidant feed for supplying the burner with the oxygen-containing oxidant gas (18),
- wherein the fuel gas feed and the oxidant gas feed feed the fuel gas (17) and the oxidant gas (18) to the burner (3) separately, so that the fuel gas (17) and the oxidant gas (18) only mix in the burner (3),
- wherein the burner (3) is designed as a pore burner,
- wherein an ignition device (30) is provided,
- wherein the fuel gas feed is formed by an anode side (5) of the fuel cell (2),
- wherein the burner (3) contains a porous structure (25) through which a flow can flow, in which in operation of the burner (3) the burning of fuel gas (17) with oxidant gas (18) or of anode waste gas (17) with cathode waste gas (18) takes place,
**characterized**
- **in that** the burner (3) is arranged downstream of the fuel cell (2) and is designed as residual gas burner (3) for burning hydrogen-containing anode waste gas (17) of the fuel cell (2) with oxygen-containing cathode waste gas (18) of the fuel cell (2),
- **in that** the oxidant feed is formed by a cathode side (6) of the fuel cell (2),
- **in that** the porous structure (25) in its throughflow direction one after the other comprises at least two zones (35, 36) with different pore sizes,
- **in that** a preheating zone (35) on the on-flow side has a smaller pore size than an reaction zone (36) on the out-flow side,
- **in that** the burner (3) or the residual gas burner (3) comprises the ignition device (30) downstream of the porous structure (25).

2. The fuel cell system according to Claim 1, **characterized**
- **in that** the pore size in the preheating zone (35) is selected so small that in operation of the burner (3) or the residual gas burner (3) no flame propagation takes place in the porous structure (25) within the preheating zone (35),
- **in that** the pore size in the reaction zone (36) is selected so large that in operation of the burner (3) or the residual gas burner (3) flame propagation takes place in the porous structure (25) within the reaction zone (36).

3. The fuel cell system according to Claim 1 or 2, **characterized in that** the burner (3) or the residual gas burner (3) comprises a mixing chamber (24) into which on the inlet side the fuel gas (17) and the oxidant gas (18) or the anode waste gas (17) and the cathode waste gas (18) flow and which on the outlet side is delimited by the porous structure (25).

4. The fuel cell system according to any one of the Claims 1 to 3, **characterized**
- **in that** a cooling gas feeding device (26) is provided, with which a cooling gas can be fed to the burner (3) or the residual gas burner (3) on the inlet side,
- **in that** a sensor device (31) for determining the temperature of the porous structure (25) is provided,
- **in that** a control (34) connected to the cooling gas feeding device (26) and to the sensor device (31) is provided, which actuates the cooling gas feeding device (26) as a function of the temperature of the porous structure (25).

5. The fuel cell system according to any one of the Claims 1 to 4, **characterized**
- **in that** a cathode gas feed (47) is connected to the fuel cell (2) on the inlet side,
- **in that** a sensor device (31) for determining the temperature of the porous structure (25) is provided,
- **in that** a control (34) connected to the cathode gas feed (47) and to the sensor device (31) for operating the cathode gas feed (47) as a function of the temperature of the porous structure (25) is provided.

6. The fuel cell system according to the Claims 4 and 5, **characterized in that** the control (34) is designed so that on actuating the cooling gas feed (26) it takes into account the actuation of the cathode gas feed (47).

7. The fuel cell system according to any one of the Claims 1 to 6, **characterized in that** the porous structure (25) consists of an inert material.

## Revendications

1. Système de cellules de combustible (1), de préférence sur un véhicule automobile, comprenant
- au moins une cellule de combustible (2) pour générer du courant électrique (13) à partir d'un gaz d'anode (9) contenant de l'hydrogène et d'un gaz de cathode (11) contenant de l'oxygène et un agencement de brûleur (49),
- l'agencement de brûleur présentant un brûleur (3) pour la combustion d'un gaz de combustion (17) contenant de l'hydrogène avec un gaz oxydant (18) contenant de l'oxygène,
- l'agencement de brûleur (49) présentant une arrivée de gaz combustible pour l'alimentation du brûleur (3) avec le gaz combustible (17) contenant de l'hydrogène,
- l'agencement de brûleur (4) présentant une arrivée d'oxydant pour l'alimentation du brûleur avec le gaz oxydant (18) contenant de l'oxygène,
- l'arrivée de gaz combustible et l'arrivée de gaz oxydant amenant le gaz combustible (17) et le gaz oxydant (18) séparément au brûleur (3), de sorte que le gaz combustible (17) et le gaz oxydant (18) se mélangent d'abord dans le brûleur (3),
- le brûleur (3) étant conçu sous forme de brûleur à pores,
- un dispositif d'allumage (30) étant prévu,
- l'arrivée de gaz combustible étant formée par un côté anode (5) de la cellule de combustible (2),
- le brûleur (3) contenant une structure (25) poreuse pouvant être traversée, dans laquelle la combustion de gaz combustible (17) avec du gaz oxydant (18) ou de gaz d'échappement d'anode (17) avec du gaz d'échappement de cathode (18) a lieu pendant le fonctionnement du brûleur (3),
**caractérisé en ce que**
- le brûleur (3) est placé en aval de la cellule de combustible (2) et est conçu sous forme de brûleur à gaz résiduel (3) pour la combustion de gaz d'échappement d'anode (17) contenant de l'hydrogène de la cellule de combustible (2) avec du gaz d'échappement de cathode (18) contenant de l'oxygène de la cellule de combustible (2),
- **en ce que** l'arrivée d'oxydant est formée par un côté cathode (6) de la cellule de combustible (2),
- **en ce que** la structure (25) poreuse présente dans son sens d'écoulement l'une derrière l'autre au moins deux zones (35, 36) avec différentes grandeurs de pore,
- **en ce qu'**une zone de préchauffage (35) côté arrivée du courant présente une grandeur de pore inférieure à une zone de réaction (36) côté évacuation,
- **en ce que** le brûleur (3) ou le brûleur à gaz résiduel (3) présente le dispositif d'allumage (30) en aval de la structure (25) poreuse.

2. Système de cellules de combustible selon la revendication 1,
**caractérisé en ce que**
- la grandeur de pore dans la zone de préchauffage (35) est choisie si petite qu'aucune propagation de flamme n'a lieu dans la structure (25) poreuse à l'intérieur de la zone de préchauffage (35) pendant le fonctionnement du brûleur (3) ou du brûleur à gaz résiduel (3),
- **en ce que** la grandeur de pore dans la zone de réaction (36) est choisie si grande qu'une propagation de flamme a lieu dans la structure (25) poreuse à l'intérieur de la zone de réaction (36) pendant le fonctionnement du brûleur (3) ou du brûleur à gaz résiduel (3).

3. Système de cellules de combustible selon la revendication 1 ou 2,
**caractérisé en ce que**
le brûleur (3) ou le brûleur à gaz résiduel (3) présente un espace de mélange (24) dans lequel entrent côté entrée le gaz de combustion (17) et le gaz oxydant (18) ou le gaz d'échappement d'anode (17) et le gaz d'échappement de cathode (18) entrent et qui est limité côté sortie par la structure (25) poreuse.

4. Système de cellules de combustible selon l'une quelconque des revendications 1 à 3,
**caractérisé en ce que**
- un dispositif d'arrivée de gaz réfrigérant (26) est prévu, avec lequel un gaz réfrigérant peut être amené côté entrée au brûleur (3) ou au brûleur à gaz résiduel (3),
- **en ce qu'**un capteur (31) est prévu pour déterminer la température de la structure (25) poreuse,
- **en ce qu'**une commande (34) reliée au dispositif d'arrivée de gaz réfrigérant (26) et au capteur (31) est prévue, laquelle actionne le dispositif d'arrivée de gaz réfrigérant (26) en fonction de la température de la structure (25) poreuse.

5. Système de cellules de combustible selon l'une quelconque des revendications 1 à 4,
**caractérisé en ce que**
- une arrivée de gaz de cathode (47) est raccordée côté entrée à la cellule de combustible (2),
- **en ce qu'**un capteur (31) est prévu pour déterminer la température de la structure (25) poreuse,
- **en ce qu'**une commande (34) reliée à l'arrivée de gaz de cathode (47) et au capteur (31) est prévue pour le fonctionnement de l'arrivée de gaz de cathode (47) en fonction de la température de la structure (25) poreuse.

6. Système de cellules de combustible selon les revendications 4 à 5,
**caractérisé en ce que**
la commande (34) est conçue de telle sorte qu'elle prend en compte l'actionnement de l'arrivée de gaz de cathode (47) lors de l'actionnement de l'arrivée de gaz réfrigérant (26).

7. Système de cellules de combustible selon l'une quelconque des revendications 1 à 6,
**caractérisé en ce que**
la structure (25) poreuse est à base d'un matériau inerte.
